# EUROPÄISCHE PATENTANMELDUNG

(11) **EP 1 288 086 A1**
(43) Veröffentlichungstag der Anmeldung: **05.03.2003**
(21) Anmeldenummer: 02017434.8
(22) Anmeldetag: 03.08.2002
(51) Int. Cl.: B60R 21/26

(54) **Rückhaltevorrichtung für Kraftfahrzeug-Insassen mit einem schallgedämpften Gasgenerator**

(30) Priorität: 29.08.2001 DE 10142168
(71) Anmelder: DaimlerChrysler AG, 70567 Stuttgart (DE)
(72) Erfinder: Bocksch, Ralf, 88422 Moosburg (DE); Faulhaber, Peter, 81539 München (DE); Grünewald, Michael, 85635 Höhenkirchen (DE); Rüdebusch, Clark, 71272 Renningen (DE)

(57) **Zusammenfassung**

Um ein Sicherheitssystem für ein Kraftfahrzeug mit einem Gasgenerator zur Erzeugung eines Gasstroms, mindestens einer in den Gasgenerator (1) eingebrachten Gasaustrittsöffnung (3) sowie mindestens einem dem Gasgenerator zugeordneten Rückhaltemittel (8) zu schaffen, welches unter Beibehaltung der aus sicherheitstechnischer Sicht relevanten Eigenschaften von bekannten Systemen einen besseren Komfort für Fahrzeuginsassen während der Gaserzeugung bietet wird vorgeschlagen, das Sicherheitssystem mit Mitteln (4,5,6,7,9) zur Komforterhöhung auszustatten, die der Gasaustrittsöffnung (3) zugeordnet sind und einen beim Gasaustritt entstehenden Frequenzverlauf beeinflussen, insbesondere dämpfen.

## Beschreibung

Die Erfindung betrifft ein Sicherheitssystem für ein Kraftfahrzeug mit einem Gasgenerator zur Erzeugung eines Gasstroms, mindestens einer in den Gasgenerator eingebrachten Gasaustrittsöffnung sowie mindestens einem dem Gasgenerator zugeordneten Rückhaltemittel.

Derartige Sicherheitssysteme sind aus dem Stand der Technik hinlänglich bekannt. Bei diesen bekannten Systemen kann es jedoch bei ungünstigen Begleitumständen aufgrund der Gasausströmung und der damit verbundenen Schallproduktion zu einer Beeinträchtigung des Komforts von Fahrzeuginsassen kommen.

Vor diesem Hintergrund ist es Aufgabe der vorliegenden Erfindung, ein Sicherheitssystem für ein Kraftfahrzeug mit einem Gasgenerator zur Erzeugung eines Gasstroms, mindestens einer in den Gasgenerator eingebrachten Gasaustrittsöffnung sowie mindestens einem dem Gasgenerator zugeordneten Rückhaltemittel zu schaffen, welches unter Beibehaltung der aus sicherheitstechnischer Sicht relevanten Eigenschaften von bekannten Systemen einen besseren Komfort für Fahrzeuginsassen während der Gaserzeugung bietet.

Diese Aufgabe wird erfindungsgemäß mit einem Sicherheitssystem mit den Merkmalen des Patentanspruchs 1 gelöst.

Demnach zeichnet sich die erfindungsgemäße Lösung dadurch aus, dass neben einem Gasgenerator mit mindestens einer Öffnung und mindestens einem Rückhaltemittel, Mittel zur Erhöhung des Komforts vorgesehen sind, die einen beim Gasaustritt entstehenden Frequenzverlauf beeinflussen, insbesondere dämpfen. Dadurch wird der Frequenzverlauf des gesamten Schallereignisses beeinflusst und es wird gewährleistet, dass für Fahrzeuginsassen trotz Aktivierung des erfindungsgemäßen Sicherheitssystems ein angemessener Komfort gewährleistet ist. Der entstehende Schall wird zumindest in Teilbereichen gedämpft und somit eine eventuell unangenehme Geräuschentwicklung verhindert. Insbesondere störende mittel- und höherfrequente Anteile des Gaserzeugungsgeräusches können mit der erfindungsgemäßen Lösung reduziert werden.

Gemäß einer Ausführungsform der Erfindung reflektieren die Mittel zur Komforterhöhung den beim Erzeugen eines Gasstroms entstehenden Schall zumindest teilweise. Dadurch kann erreicht werden, dass der bei der Gaserzeugung entstehende Schall sich nicht von dem Gasgenerator direkt auf Fahrzeuginsassen zu, sondern erst in eine geeignete andere Richtung bewegt. Dieses Umleiten bzw. Abschirmen kann zur Reduzierung von Schallspitzen beitragen.

Es ist auch denkbar, dass die Mittel zur Komforterhöhung den Schall zumindest teilweise absorbieren. Durch das Aufnehmen von Schallwellen, kann der Schalldruck insgesamt gedämpft und damit zur Erhöhung des Komforts beigetragen werden. Beugung und Brechung der Schallwellen sind auch denkbar.

Die Mittel zur Komforterhöhung können plattenförmig ausgestaltet sein. Solche plattenförmigen Strukturen eignen sich besonders gut, um Schallwellen in eine bestimmte Richtung zu leiten. Es ist denkbar ein Blech vorzusehen, das zwischen der Gasaustrittsöffnung und dem Insassen angeordnet ist.

Die Mittel können jedoch auch kanalförmig ausgestaltet und so angeordnet sein, dass eine Öffnung der kanalförmigen Mittel vor der Gasaustrittsöffnung des Gasgenerators angeordnet ist. Auf diese Weise wird der entstehende Druck direkt in die kanalförmigen Mittel geleitet. Wenn diese Mittel zudem eine Abwinklung aufweisen, können die entstehenden Schallwellen in eine Richtung gelenkt werden, die geeignet ist, einen Insassen möglichst wenig zu beeinträchtigen. Es können auch mehrere Abwinklungen vorgesehen sein, so dass eine Art mäanderförmige Verlängerung der Austrittsöffnung entsteht.

Die Mittel können aus Schall reflektierenden Medien aber auch aus Schall absorbierenden Medien bestehen. Es ist auch denkbar, dass eine Kombination von beiden Materialien vorgesehen ist. Je nach Anordnung der Materialien auf den Mitteln kann eine ganz bestimmte Quote der Dämpfung von Schalldruckspitzen erzielt werden. Es ist denkbar, die Materialien so auszuwählen, dass sie einen Frequenzbereich besonders gut reflektieren bzw. absorbieren. Dadurch wird die Effektivität der Mittel zur Komforterhöhung gesteigert.

Gemäß einer weiteren Ausführungsform bestehen die Mittel zur Komforterhöhung aus mindestens einem Helmholtzresonator. Ein solcher Helmholtzresonator weist ein bestimmtes Luftvolumen auf. Dieses Luftvolumen wird durch Schallwellen angeregt. Durch Resonanz wird die Luftbewegung verstärkt. Dadurch entsteht Reibung, die wiederum Wärme erzeugt. Demnach absorbiert der Helmholtzresonator Schallwellen und wandelt diese in Wärme um. Der Frequenzbereich des Helmholtzresonators kann auf ein bestimmtes Frequenzspektrum abgestimmt sein, welches beim Erzeugen eines Gasstroms entsteht. Somit können beispielsweise besonders störende Frequenzbereiche absorbiert werden.

Die Mittel zur Komforterhöhung können jeweils einer Gasaustrittsöffnung des Gasgenerators zugeordnet sein. Auf diese Weise können die Schallwellen direkt am Ort ihrer Entstehung erfasst werden, bevor sie sich im Fahrzeuginnenraum ausbreiten. Demnach können bei mehreren Gasaustrittsöffnungen auch mehrere Mittel zur Komforterhöhung vorgesehen sein.

Gemäß einer weiteren Ausführungsform können die Mittel aus einer Schicht bestehen, die auf der Innenseite eines durch den erzeugten Gasstrom aufzuweitenden Gassack angebracht sind. Mit der Innenseite ist in diesem Zusammenhang die dem Gasgenerator zugewandte Seite des Gassacks gemeint. Diese Schickt kann aus Schall absorbierendem Material bestehen. Es ist auch möglich, den Gassack selber aus absorbierendem Material zu gestalten. Durch diese Anordnung wird ein Teil der Schalldruckspitzen in dem Gassack absorbiert und es wird verhindert, dass diese in den Fahrzeuginnenraum dringen.

Der Frequenzverlauf kann zusätzlich durch eine strömungstechnisch günstige Gestaltung der Ausströmöffnung im Gasgenerator erfolgen. So können beispielsweise die Kanten so angepasst werden, dass durch die Strömung entstehende Geräusche minimiert werden.

Wenn als Ausströmöffnung ein Kanal vorgesehen ist, kann der Querschnitt des Ausströmkanals entlang seiner Ausbreitungslänge verändert werden. Durch die Querschnittsänderungen verändert sich die Strömungsgeschwindigkeit sowie der Druck des Gases. Aufgrund der Abhängigkeit zwischen Schallgeschwindigkeit und Druck des Ausbreitungsmediums, kommt es zu einer Beeinflussung des Schallereignisses. Die Querschnittsänderungen im Ausströmkanal können mehrfach erfolgen.

Wenn in dem Gasgenerator mehrere Öffnungen vorgesehen sind, können diese beispielsweise in ihrer Form unterschiedlich gestaltet werden. Auch der Abstand der einzelnen Öffnungen zueinander kann angepasst werden. Durch Interferenzeffekte wird das Gesamt-Schallereignis beeinflusst. Es kann zu Überlagerungen (im besten Falle Auslöschungen) der Geräuschentwicklung der einzelnen Ausströmöffnungen kommen.

Das erfindungsgemäße Sicherheitssystem kann mit allen bekannten Rückhaltemitteln ausgerüstet werden, die durch einen plötzlich entstehenden Gasstrom aktiviert werden. Beispielhaft seinen hier Airbag und Gurtsysteme jeglicher Art genannt. Die Erfindung kann zudem mit allen bekannten Gaserzeugungssystemen eingesetzt werden, beispielsweise mit Hybrid- oder pyrotechnischen Gaserzeugungssystemen.

Im folgenden wird die Erfindung anhand den in der Zeichnung dargestellten Ausführungsbeispielen des näheren erläutert. Es zeigen:
- Fig. 1:: eine schematische Darstellung eines erfindungsgemäßen Sicherheitssystems mit einem plattenförmigen Mittel zur Komforterhöhung;
- Fig. 2:: eine schematische Darstellung eines erfindungsgemäßen Sicherheitssystems mit einem rohrförmigen Mittel zur Komforterhöhung;
- Fig. 3:: eine schematische Darstellung eines erfindungsgemäßen Sicherheitssystems mit einem Helmholtzresonator als Mittel zur Komforterhöhung und
- Fig. 4:: eine schematische Darstellung eines erfindungsgemäßen Sicherheitssystems mit einem Gassack und an diesem vorgesehene Mittel zur Komforterhöhung.

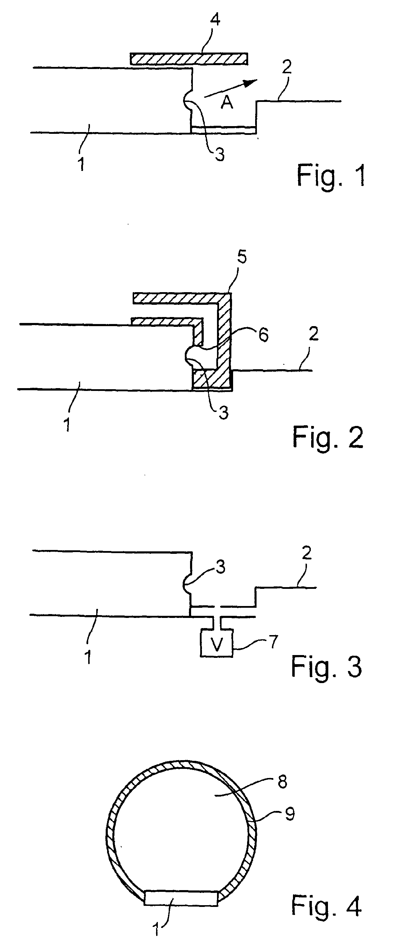

In Fig. 1 ist ein Gasgenerator 1 dargestellt, der dazu dient, einen Gasstrom zu erzeugen. Ein solcher Gasstrom kann dazu eingesetzt werden, Rückhaltemittel zu aktivieren. Beispielsweise kann durch einen solchen Gasstrom ein Gassack befüllt oder mechanische Elemente in Bewegung versetzt werden. Dieser Gasgenerator 1 ist mit geeigneten Befestigungsmitteln 2 in einer fahrzeugfesten Position gehalten. In den Gasgenerator 1 ist eine Öffnung 3 eingebracht, durch die der erzeugte Gasstrom austreten kann. Die Gasaustrittsrichtung ist durch den Pfeil A angedeutet.

An dem Gasgenerator 1 ist eine Platte 4 angeordnet. Sie kann mittels üblicher Befestigungselement an dem Gasgenerator 1 festgelegt sein. In dem dargestellten Ausführungsbeispiel ist die Platte 4 in einem gewissen Winkel zu der Gasaustrittsrichtung A angeordnet. Über diesen Winkel kann eingestellt werden, wie viel der entstehenden Schallwellen, die sich nicht unbedingt entsprechend der Gasaustrittsrichtung A ausbreiten, reflektiert werden. Die Platte 4 kann aus Material bestehen, welches Schallwellen besonders gut reflektiert. Sie kann aber auch aus solchem Material bestehen, welche Schallwellen besonders gut absorbiert. Es ist aber auch eine Mischung von beiden Varianten denkbar. Beispielsweise kann auf der der Öffnung des Gasgenerator 1 zugewandten Seite der Platte 4 eine zusätzliche absorbierende Schicht - aus einem Gitter und/oder Schaum - angebracht sein. Eine solche Schicht ist in Fig. 1 nicht dargestellt. Je näher die Platte 4 an dem Gasgenerator 1 angebracht ist, umso effektiver ist die Abschirmung der Schallwellen.

In Fig. 2 ist eine weitere Variante des erfindungsgemäßen Sicherheitssystems dargestellt. Diese unterscheidet sich von der zuvor beschriebenen lediglich dadurch, dass die Mittel zur Komforterhöhung 5 eine kanalförmige Gestaltung aufweisen. Eine Öffnung 6 des Kanals 5 ist der Gasaustrittsöffnung 3 des Gasgenerators 1 zugeordnet. So werden die bei der Erzeugung des Gasstroms entstehenden Schallwellen direkt in den Kanal 5 geleitet und breiten sich zunächst in diesem aus. Die Wände des Kanals 5 sind mit einem Schall absorbierendem Material ausgekleidet. Dieses weist durch die Art seiner Oberflächengestaltung eine aktiv dämpfende Oberfläche auf. Der Kanal 5 ermöglicht einen ungehinderten Austritt des Gasstroms und dämpft zudem durch seine energieabsorbierenden Eigenschaften zumindest einen Teil des entstehenden Schalldrucks. Die Innenauskleidung des Kanals 5 kann beispielsweise aus Schaum, insbesondere Metallschaum, oder einem Gitter bestehen.

In Fig. 3 sind wiederum andere Mittel zur Komforterhöhung dargestellt. Sie bestehen aus einem Helmholtzresonator 7, der in der Nähe der Gasaustrittsöffnung 3 angeordnet ist. Der Helmholtzresonator umfasst ein gewisses Gasvolumen V, welches durch die beim Erzeugen des Gasstroms entstehenden Schallwellen angeregt wird. In einem gewissen Frequenzbereich verstärken die Schallwellen sich in dem Volumen durch Resonanz. Dadurch wird das Gasvolumen verstärkt angeregt und durch die dabei entstehende Reibung wird Wärme freigesetzt. Der Resonator wandelt also Schallwellen in einem bestimmten Frequenzbereich in Wärme um. Durch die Umwandlung wird dieser Frequenzbereich demnach gedämpft, was dazu beiträgt, Schalldruckspitzen zu dämpfen und einen gewissen Komfort sicherzustellen.

In Fig. 4 ist schematisch ein Gassack 8 in entfaltetem Zustand mit einem Gasgenerator 1 dargestellt. Der Gassack 8 zeichnet sich dadurch aus, dass auf seiner Innenseite, d.h. auf seiner dem Gasgenerator zugewandten Seite eine Schicht 9 aufgebracht ist. Diese Schicht besteht aus einem Schall absorbierendem Material. Beispielsweise können dazu Filzmatten, Schaum, Metallfolie oder Mineralfaserstoffe eingesetzt werden. Der Gassack kann aber auch selber aus diesem Material bestehen.

Wichtig bei allen in unmittelbarer Nähe des Gasgenerators angeordneten Medien ist deren Hitzebeständigkeit. Beim Erzeugen des Gasstroms wird Hitze freigesetzt, der diese Medien standhalten müssen, um wirksam werden zu können. Alle beschriebenen Mittel zur Komforterhöhung können auch in Kombination miteinander eingesetzt werden. So ist es beispielsweise denkbar einen Gasgenerator mit einem Helmholtzresonator und gleichzeitig mit einem plattenförmigen Abschirmelement zu versehen.

## Patentansprüche

1. Sicherheitssystem für ein Kraftfahrzeug mit
- einem Gasgenerator (1) zur Erzeugung eines Gasstroms,
- mindestens einer in den Gasgenerator eingebrachten Gasaustrittsöffnung (3),
- mindestens einem dem Gasgenerator zugeordneten Rückhaltemittel (9) sowie
- Mitteln zur Komforterhöhung, die der Gasaustrittsöffnung zugeordnet sind und einen beim Gasaustritt entstehenden Frequenzverlauf beeinflussen.

2. Sicherheitssystem nach Anspruch 1,
**dadurch gekennzeichnet, dass**
die Mittel zur Komforterhöhung den entstehenden Schall zumindest teilweise reflektieren.

3. Sicherheitssystem nach Anspruch 1 oder 2,
**dadurch gekennzeichnet, dass**
die Mittel zur Komforterhöhung den entstehenden Schall zumindest teilweise absorbieren.

4. Sicherheitssystem nach einem der vorhergehenden Ansprüche,
**dadurch gekennzeichnet, dass**
die Mittel zur Komforterhöhung plattenförmig ausgestaltet sind.

5. Sicherheitssystem nach einem der vorhergehenden Ansprüche,
**dadurch gekennzeichnet, dass**
die Mittel zur Komforterhöhung kanalförmig ausgestaltet sind.

6. Sicherheitsvorrichtung nach Anspruch 4 oder 5,
**dadurch gekennzeichnet, dass**
die kanalförmigen Mittel (5) mindestens eine Abwinklung aufweisen.

7. Sicherheitssystem nach der Ansprüche 4, 5 oder 6,
**dadurch gekennzeichnet, dass**
die Mittel zur Komforterhöhung in einem speziellen Winkel zu der Austrittsrichtung A des Gasstroms angeordnet sind.

8. Sicherheitssystem nach einem der Ansprüche 4 bis 7,
**dadurch gekennzeichnet,dass**
die Mittel zur Komforterhöhung zumindest teilweise aus Schall reflektierenden Materialien bestehen.

9. Sicherheitssystem nach einem der Ansprüche 4 bis 8,
**dadurch gekennzeichnet, dass**
die Mittel zur Komforterhöhung zumindest teilweise aus Schall absorbierenden Materialien bestehen.

10. Sicherheitssystem nach Anspruch 1,
**dadurch gekennzeichnet, dass**
die Mittel zur Komforterhöhung aus mindestens einem Helmholtzresonator (7) gebildet sind.

11. Sicherheitssystem nach einem der vorhergehenden Ansprüche,
**dadurch gekennzeichnet, dass**
die Mittel zur Komforterhöhung auf das Frequenzspektrum des bei der Erzeugung eines Gasstroms entstehenden Schalls abgestimmt sind.

12. Sicherheitssystem nach einem der vorhergehenden Ansprüche,
**dadurch gekennzeichnet, dass**
jeder Gasaustrittsöffnung (3) ein Mittel zur Reduzierung des beim Erzeugen eines Gasstroms entstehenden Schalls zugeordnet ist.

13. Sicherheitssystem nach Anspruch 1,
**dadurch gekennzeichnet, dass**
die Mittel zur Komforterhöhung aus einer auf der dem Gasgenerator zugewandten Seite eines Gassacks (9) angeordneten Schicht (8) bestehen.

14. Sicherheitssystem nach Anspruch 13,
**dadurch gekennzeichnet, dass**
die Schicht (8) aus Schall absorbierendem Material besteht.

15. Sicherheitssystem nach Anspruch 1,
**dadurch gekennzeichnet, dass**
das Rückhaltemittel ein Gassack (9) aus energieabsorbierendem Material ist.
